# EUROPEAN PATENT SPECIFICATION

(11) **EP 2 565 872 B1**
(45) Date of publication and mention of the grant of the patent: **24.08.2016**
(21) Application number: 12178543.0
(22) Date of filing: 30.07.2012
(51) Int. Cl.: G10L 19/008, G10L 19/02

(54) **Method and apparatus for down-mixing multi-channel audio signal**
Vorrichtung und Verfahren zur Codierung und Decodierung eines Mehrkanal-Audiosignals
Procédé et appareil pour le mixage réducteur de signal audio multicanal

(30) Priority: 03.08.2011 KR 20110077414
(43) Date of publication of application: 06.03.2013
(73) Proprietor: Samsung Electronics Co., Ltd., Suwon-si, Gyeonggi-do, 443-742 (KR)
(72) Inventor: Lee, Chang-Joon, Gyeonggi-do 443-742 (KR)
(74) Representative: Birchenough, Lewis

(56) References cited:
- EP-A1- 2 360 683
- WO-A1-2007/102674
- WO-A2-2006/060280
- DAVID VIRETTE ET AL: "Description of France Telecom Binaural Decoding proposal for MPEG Surround", 76. MPEG MEETING; 03-04-2006 - 07-04-2006; MONTREUX; (MOTION PICTUREEXPERT GROUP OR ISO/IEC JTC1/SC29/WG11),, no. M13276, 30 March 2006 (2006-03-30), XP030041945, ISSN: 0000-0239
- DONG SOO KIM ET AL: "Refined downmix signaling for MPEG Surround", 76. MPEG MEETING; 03-04-2006 - 07-04-2006; MONTREUX; (MOTION PICTURE EXPERT GROUP OR ISO/IEC JTC1/SC29/WG11),, no. M13356, 30 March 2006 (2006-03-30), XP030042025, ISSN: 0000-0237

## Description

### BACKGROUND OF THE INVENTION

### Field of the Invention:

The present invention relates to audio signal processing. More particularly, the present invention relates to a method and apparatus for down-mixing a multi-channel audio signal.

### Description of the Related Art:

Due to the rapid growth of digital technology, increases in bandwidth for data transmission, and increases in storage capacity of storage devices for storing various kinds of multimedia data, the use of multimedia data using multi-channel audio (e.g., a 5.1 multi-channel audio system) has been popularized. Concurrent with the increasing performance of portable terminals and portable electronic devices, such as smart phones, tablet PCs, portable media players, and other similar electronic devices, the use of multimedia files including multi-channel audio on portable terminals has been increasing.

However, internal speakers and external speakers (such as earphones, headphones and externally attachable speakers) of a portable terminal generally support only 2 channels. Thus, when using a multimedia file consisting of multi-channel audio, the portable terminal performs a function of downmixing the multiple channels of a multi-channel audio signal into a 2-channel audio signal.

In order to downmix a multi-channel audio signal into a 2-channel audio signal and output the 2-channel audio signal, a large number of computation processes are executed, resulting in a lot of power consumption. Thus, for portable electronic devices operating by a battery, such as a portable terminal, the computation processes cause a decrease in a run-time or a battery charge of the portable terminal and an increase in heat from the portable terminal.

According to the related-art for downmixing a multi-channel audio signal, the multi-channel audio signal is inversely transformed from a frequency domain to a time domain for each channel and is then downmixed by using Pulse Code Modulation (PCM) samples for each channel that are inversely transformed from the frequency domain to the time domain. Thus, the inverse transformation must be performed as many times as the number of channels of the multi-channel audio signal.

For example, when a multi-channel audio signal, such as a 5.1-channel audio signal, is downmixed, the 5.1-channel audio signal is inversely transformed from the frequency domain to the time domain a total of six times according to the number of channels, that being six channels, and is then downmixed into a 2-channel audio signal. Thus, there is a problem of high power consumption and increased heat in devices performing a downmixing using a 2-channel output, such as a portable terminal.

In addition, according to the related-art for downmixing a multi-channel audio signal, coding is performed by using a block switching method in which an audio signal is classified into stationary signals and non-stationary signals that have different characteristics, and the stationary signals and non-stationary signals are coded in different block sizes.

When the block switching method is used, the audio signals are coded in a large block and a small block for each channel which are inversely transformed from the frequency domain to the time domain twice, resulting in four inverse transformation processes in a case of down-mixing a multi-channel audio signal to a 2-channel audio signal.

The above-described related-art for down-mixing execute six or four inverse transforming processes, resulting in high power consumption and significant heat generation, and thus, are not well suited for electronic devices such as portable terminals operating by a battery.

Therefore, because portable terminals typically have two output channels, there is a need for a technology for minimizing power consumption and heat of a portable terminal by minimizing a number of inverse transforming processes from the frequency domain to the time domain when the portable terminal downmixes a multi-channel audio signal.

It is further known according to the document D.Virette et al. "Description of France Telecom Binaural Decoding proposal for MPEG Surround", 76. MPEG Meeting, document M13276, April 2006, a technique of binauralisation taking place in the hybrid QMF domain.

### SUMMARY OF THE INVENTION

Aspects of the present invention are to address at least the above-mentioned problems and/or disadvantages and to provide at least the advantages described below. Accordingly, an aspect of the present invention is to provide a method and apparatus for quickly and simply down-mixing a multi-channel audio signal by performing only frequency-time inverse transforming processes optimized to the number of output channels.

According to an aspect of the present invention, a method of down-mixing a multi-channel audio signal is provided. The method includes restoring sub-band Pulse Coded Modulation (PCM) samples for each channel of the multi-channel audio signal by decoding the multi-channel audio-signal and then dequantizing a sub-band coded multi-channel audio signal, scaling the restored sub-band PCM samples for each channel with a coefficient corresponding to a down-mixing configuration, generating sub-band PCM samples corresponding to predetermined channels by down-mixing the scaled sub-band PCM samples for each channel into the predetermined channels, and performing inverse sub-band filtering on the generated sub-band PCM samples corresponding to the predetermined channels.

According to another aspect of the present invention, an apparatus for down-mixing a multi-channel audio signal is provided. The apparatus includes a dequantizing unit for restoring sub-band Pulse Coded Modulation (PCM) samples for each channel of the multi-channel audio signal by decoding the multi-channel audio signal and then dequantizing a sub-band coded multi-channel audio signal, a scaling unit for scaling the restored sub-band PCM samples for each channel with a coefficient corresponding to a down-mixing configuration, a pre-down-mixing unit for generating sub-band PCM samples corresponding to predetermined channels by down-mixing the scaled sub-band PCM samples for each channel into the predetermined channels, and an inverse sub-band filter bank for performing inverse sub-band filtering on the generated sub-band PCM samples corresponding to the predetermined channels.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will become more apparent from the following description taken in conjunction with the accompanying drawing, in which:
FIG. 1 is a block diagram of an apparatus for downmixing a multi-channel audio signal, according to an exemplary embodiment of the present invention; and
FIG. 2 is a flowchart illustrating a method of downmixing a multi-channel audio signal, according to an exemplary embodiment of the present invention.

Throughout the drawings, it should be noted that like reference numbers are used to depict the same or similar elements, features, and structures.

### DETAILED DESCRIPTION OF THE PREFERRED EMBODIMENT

The following description with reference to the accompanying drawings is provided to assist in a comprehensive understanding of exemplary embodiments of the invention of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

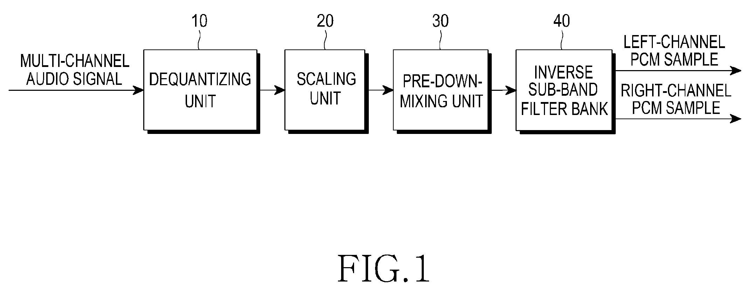

FIG. 1 is a block diagram of an apparatus for downmixing a multi-channel audio signal, according to an exemplary embodiment of the present invention.

Referring to FIG. 1, the apparatus includes a dequantizing unit 10, a scaling unit 20, a pre-downmixing unit 30, and an inverse sub-band filter bank 40.

When a multi-channel audio signal, such as a 5.1-channel audio signal or bitstream, that is coded by a sub-band coding method is input into the apparatus, the dequantizing unit 10 restores sub-band Pulse Coded Modulation (PCM) samples for each channel by first decoding the input multi-channel audio signal in accordance with the sub-band coding method and then dequantizing the decoded multi-channel audio signal.

The scaling unit 20 performs a scaling function according to a predetermined downmixing configuration on the sub-band PCM samples of each channel that are restored by the dequantizing unit 10. For example, the scaling unit 20 may perform the scaling function by calculating a Scaling Factor (ScF) for each of twelve PCM samples. The pre-downmixing unit 30 pre-downmixes the sub-band PCM samples of each channel that are scaled by the scaling unit 20 into predetermined channels, such as the two channels of a left and a right) channel.

The inverse sub-band filter bank 40 includes a plurality of inverse sub-band filters and outputs a time-domain audio signal, such as a left-channel PCM sample and a right-channel PCM sample, that is transformed from a frequency-domain audio signal by performing an inverse sub-band filtering on the channels that are pre-downmixed by the pre-downmixing unit 30. Although not shown, the apparatus may further include a storage unit for storing multi-channel audio signals or multimedia data consisting of multi-channel audio signals.

The apparatus may be applied to or included in portable electronic devices such as portable terminals. Examples of the portable terminals are a video phone, a cellular phone, a smart phone, an International Mobile Telecommunication 2000 (IMT-2000) terminal, a Wideband Code Division Multiple Access (WCDMA) terminal, a Universal Mobile Telecommunication Service (UMTS) terminal, a Personal Digital Assistant (PDA), a Portable Multimedia Player (PMP), a Digital Multimedia Broadcasting (DMB) terminal, an E-book, a portable computer, such as a laptop computer or a tablet PC, and a digital camera. However, the present invention is not limited thereto and the apparatus may be applied to other similar electronic devices.

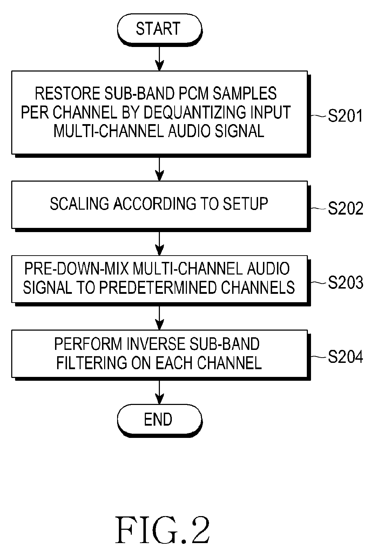

FIG. 2 is a flowchart illustrating a method of downmixing a multi-channel audio signal, according to an exemplary embodiment of the present invention.

Referencing FIGs. 1 and 2, in step S201, when a multi-channel audio signal coded by the sub-band coding method is input the apparatus of FIG. 1, the dequantizing unit 10 restores sub-band PCM samples for each of channels of the input multi-channel audio signal.

In other words, when a multi-channel audio signal coded by the sub-band coding method or multimedia data including a multi-channel audio signal coded by the sub-band coding method, such as a video file including a 5.1-channel audio bitstream, is input into the apparatus of FIG. 1, the dequantizing unit 10 restores sub-band PCM samples for each channel by dequantizing a quantized multi-channel audio signal that was obtained by decoding the multi-channel audio signal. For example, when the multi-channel audio signal is a 5.1-channel audio signal, the dequantizing unit 10 restores sub-band PCM samples for a total of the six channels of the 5.1-channel audio signal. Although not required according to all aspects of the present invention, the multi-channel audio signal having a Moving Pictures Experts Group (MPEG)-1/2 or Digital Theatre System (DTS) format may be coded by the sub-band coding method.

In steps S202 and S203, the scaling unit 20 performs a scaling function according to a predetermined downmixing configuration or setup on the sub-band PCM samples of each channel that are restored by the dequantizing unit 10, and the pre-downmixing unit 30 pre-downmixes the sub-band PCM samples of each channel that are scaled by the scaling unit 20 into predetermined channels, such as the two channels of a left channel and a right channels.

If the sub-band PCM samples for each channel are restored with respect to the multi-channel audio signal or the multi-channel audio signal included in the multimedia data, then the scaling unit 20 performs the scaling function according to the predetermined downmixing configuration or setup in step S202. For example, the scaling unit 20 selects at least one scaling factor allocated to each sub-band by referencing to scaling factor selection information and then scales the sub-band PCM samples for each channel that are restored by using the selected at least one scaling factor.

Next, in step S203, the pre-down-mixing unit 30 pre-downmixes the sub-band PCM samples of the six channels of the 5.1 channel audio system, which have been scaled by the scaling unit 20, into 2 channels, such as left and right channels, or 4 channels, such as a front left channel, a front right channel, a rear left channel, and a rear right channel.

Because the present exemplary embodiments may be applied to electronic devices having a 2-channel output, such as portable terminals, it is assumed that the pre-downmixing unit 30 pre-downmixes or downmixes the sub-band PCM samples of the 5.1 channels into sub-band PCM samples of 2 channels. However, the present invention is not limited thereto, and the pre-downmixing unit 30 may pre-downmix or downmix sub-band PCM samples into any suitable number of channels.

For example, because a portable terminal may have only one output speaker, the pre-downmixing unit 30 may perform pre-downmixing to a mono-channel according to aspects of the present invention. Thus, the pre-downmixing unit 30 may pre-down-mix the sub-band PCM samples of the six channels of the 5.1 channel audio system that are scaled by the scaling unit 20 into a single channel, such as a mono-channel.

In step S204, the inverse sub-band filter bank 40 outputs a time-domain audio signal, such as a left-channel PCM sample and a right-channel PCM sample, that is transformed from a frequency-domain audio signal by performing inverse sub-band filtering on the channels, such as the left and right channels, pre-downmixed by the pre-downmixing unit 30.

That is, the inverse sub-band filter bank 40 outputs left-channel PCM sample audio and right-channel PCM sample audio audible by a user that correspond to the time-domain audio signal by performing inverse sub-band filtering on a frequency-domain left-channel audio signal and a frequency-domain right-channel audio signal that are separated according to a predetermined frequency band. The left-channel PCM sample output audio and the right-channel PCM sample output audio may be output through an internal speaker or an external speaker after undergoing a predetermined post-processing process in a portable terminal including the apparatus for downmixing a multi-channel audio signal.

As described above, the present invention performs inverse sub-band filtering on the sub-band PCM samples for each channel that are pre-downmixed from the 6 channels of a 5.1 channel audio system into 2 channels in step S204. In such a case, because the inverse sub-band filtering is performed once for the left channel and once for the right channel, inverse sub-band filtering is performed a total of two times.

According to an embodiment of the present invention, when the sub-band PCM samples of the multiple channels are pre-downmixed into a mono-channel, the inverse sub-band filter bank 40 performs inverse sub-band filtering a total of one time because the inverse sub-band filter bank 40 performs inverse sub-band filtering on only a single channel, that is, the mono-channel.

Because power consumption and generation of heat may increase in related-art devices because downmixing is performed after performing a total of six frequency-time inverse transforming processes for six channels even when a multi-channel audio signal is downmixed into a 2-channel or a 1-channel audio signal , the exemplary embodiments of the present invention in which downmixing to one or two channels is respectively performed by performing inverse sub-band filtering one time or two times are advantageous in various terms, such as providing a decrease in power consumption.

According to the exemplary embodiments of present invention, when a multi-channel audio signal, such as a 5.1-channel audio signal, is downmixed by performing frequency-time inverse transformation after pre-downmixing the multi-channel audio signal to a 2-channel audio signal by previously separating the channels before the frequency-time inverse transformation, the frequency-time inverse transformation is performed as many times as the number of channels after the downmixing.

For example, when the six channels of a 5.1 channel audio system are downmixed into two channels, the frequency-time inverse transformation is performed two times. Thus, portable terminals using the downmixing method or apparatus according to an embodiment of the present invention may minimize the number of computation processes required for the frequency-time inverse transformation, resulting in an increase in run-time and a decrease in battery power consumption and heat generation.

While the invention has been shown and described with reference to certain exemplary embodiments thereof, it will be understood by those skilled in the art that various changes in form and details may be made therein without departing from the scope of the invention as defined by the appended claims.

## Claims

1. A method of down-mixing a multi-channel audio signal, the method comprising:
restoring sub-band Pulse Coded Modulation (PCM) samples for each channel of the multi-channel audio signal by decoding the multi-channel audio signal and
then dequantizing a sub-band coded multi-channel audio signal;
the method being **characterised by**:
scaling the restored sub-band PCM samples for each channel with a coefficient corresponding to a down-mixing configuration;
generating sub-band PCM samples corresponding to predetermined channels by down-mixing the scaled sub-band PCM samples for each channel into the predetermined channels; and
performing inverse sub-band filtering on the generated sub-band PCM samples corresponding to the predetermined channels.

2. The method of claim 1, wherein the generating of the sub-band PCM samples comprises generating sub-band PCM samples corresponding to two channels by down-mixing the scaled sub-band PCM samples for each channel into the two channels.

3. The method of claim 2, wherein the performing of the inverse sub-band filtering comprises performing inverse sub-band filtering only two times by performing the inverse sub-band filtering on a left channel and a right channel.

4. The method of claim 1, wherein the generating of the sub-band PCM samples comprises generating sub-band PCM samples corresponding to a single channel by down-mixing the scaled sub-band PCM samples for each channel into the single channel.

5. The method of claim 4, wherein the performing of the inverse sub-band filtering comprises performing inverse sub-band filtering no more than one time by performing the inverse sub-band filtering on the single channel.

6. An apparatus for down-mixing a multi-channel audio signal, the apparatus comprising:
a dequantizing unit for restoring sub-band Pulse Coded Modulation (PCM) samples for each channel of the multi-channel audio signal by decoding the multi-channel audio signal and then dequantizing a sub-band coded multi-channel audio signal;
the apparatus being **characterised by**:
a scaling unit for scaling the restored sub-band PCM samples for each channel with a coefficient corresponding to a down-mixing configuration;
a pre-down-mixing unit for generating sub-band PCM samples corresponding to predetermined channels by down-mixing the scaled sub-band PCM samples for each channel into the predetermined channels; and
an inverse sub-band filter bank for performing inverse sub-band filtering on the generated sub-band PCM samples corresponding to the predetermined channels.

7. The apparatus of claim 6, wherein the pre-down-mixing unit generates sub-band PCM samples corresponding two channels by down-mixing the scaled sub-band PCM samples for each channel into the two channels.

8. The apparatus of claim 7, wherein the inverse sub-band filter bank performs inverse sub-band filtering only two times by performing the inverse sub-band filtering on a left channel and a right channel.

9. The apparatus of claim 6, wherein the pre-down-mixing unit generates sub-band PCM samples corresponding to a single channel by down-mixing the scaled sub-band PCM samples for each channel into the single channel.

10. The apparatus of claim 9, wherein the inverse sub-band filter bank performs inverse sub-band filtering no more than one time by performing the inverse sub-band filtering on the single channel.

## Patentansprüche

1. Verfahren zum Heruntermischen eines Mehrkanalaudiosignals, wobei das Verfahren Folgendes umfasst:
Wiederherstellen von impulscodierten Teilband-Modulationsabtastwerten (Pulse Coded Modulation - PCM) für jeden Kanal des Mehrkanalaudiosignals durch Decodieren des Mehrkanalaudiosignals und daraufhin Entquantisieren eines codierten Teilband-Mehrkanalaudiosignals;
wobei das Verfahren ferner durch Folgendes gekennzeichnet ist:
Skalieren der wiederhergestellten Teilband-PCM-Abtastwerte für jeden Kanal mit einem Koeffizienten, der einer Heruntermischkonfiguration entspricht;
Erzeugen von Teilband-PCM-Abtastwerten, die vorbestimmten Kanälen entsprechen, durch Heruntermischen der skalierten Teilband-PCM-Abtastwerte für jeden Kanal in die vorbestimmten Kanäle; und
Ausführen einer inversen Teilbandfilterung der erzeugten Teilband-PCM-Abtastwerte, die den vorbestimmten Kanälen entsprechen.

2. Verfahren nach Anspruch 1, wobei das Erzeugen der Teilband-PCM-Abtastwerte Folgendes umfasst: Erzeugen von Teilband-PCM-Abtastwerten, die zwei Kanälen entsprechen, durch Heruntermischen der skalierten Teilband-PCM-Abtastwerte für jeden Kanal in die zwei Kanäle.

3. Verfahren nach Anspruch 2, wobei das Durchführen der inversen Teilbandfilterung Folgendes umfasst: Durchführen der inversen Teilbandfilterung nur zwei Mal durch Durchführen der inversen Teilbandfilterung auf einem linken Kanal und einem rechten Kanal.

4. Verfahren nach Anspruch 1, wobei das Erzeugen der Teilband-PCM-Abtastwerte Folgendes umfasst: Erzeugen von Teilband-PCM-Abtastwerten, die einem einzelnen Kanal entsprechen, durch Heruntermischen der skalierten Teilband-PCM-Abtastwerte für jeden Kanal in den einzelnen Kanal.

5. Verfahren nach Anspruch 4, wobei das Durchführen der inversen Teilbandfilterung Folgendes umfasst: Durchführen einer inversen Teilbandfilterung nicht öfter als einmal, indem die inverse Teilbandfilterung auf dem einzelnen Kanal durchgeführt wird.

6. Vorrichtung zum Heruntermischen eines Mehrkanalaudiosignals, wobei die Vorrichtung Folgendes umfasst:
eine Entquantisiereinheit zum Wiederherstellen von impulscodierten Teilband-Modulationsabtastwerten (PCM) für jeden Kanal des Mehrkanalaudiosignals durch Decodieren des Mehrkanalaudiosignals und daraufhin Entquantisieren eines codierten Teilband-Mehrkanalaudiosignals;
wobei die Vorrichtung ferner durch Folgendes gekennzeichnet ist:
eine Skaliereinheit zum Skalieren der wiederhergestellten Teilband-PCM-Abtastwerte für jeden Kanal mit einem Koeffizienten, der einer Heruntermischkonfiguration entspricht;
eine Heruntermischvorstufe zum Erzeugen von Teilband-PCM-Abtastwerten, die vorbestimmten Kanälen entsprechen, durch Heruntermischen der skalierten Teilband-PCM-Abtastwerte für jeden Kanal in die vorbestimmten Kanäle; und
eine inverse Teilbandfilterbank zum Ausführen einer inversen Teilbandfilterung der erzeugten Teilband-PCM-Abtastwerte, die den vorbestimmten Kanälen entsprechen.

7. Vorrichtung nach Anspruch 6, wobei die Heruntermischvorstufe Teilband-PCM-Abtastwerte erzeugt, die zwei Kanälen entsprechen, durch Heruntermischen der skalierten Teilband-PCM-Abtastwerte für jeden Kanal in die zwei Kanäle.

8. Vorrichtung nach Anspruch 7, wobei die inverse Teilbandfilterbank eine inverse Teilbandfilterung nur zweimal durchführt, indem die inverse Teilbandfilterung auf einem linken Kanal und einem rechten Kanal durchgeführt wird.

9. Vorrichtung nach Anspruch 6, wobei die Heruntermischvorstufe Teilband-PCM-Abtastwerte erzeugt, die einem einzelnen Kanal entsprechen, durch Heruntermischen der skalierten Teilband-PCM-Abtastwerte für jeden Kanal in den einzelnen Kanal.

10. Vorrichtung nach Anspruch 9, wobei die inverse Teilbandfilterbank eine inverse Teilbandfilterung nicht mehr als einmal durchführt, indem die inverse Teilbandfilterung auf dem einzelnen Kanal durchgeführt wird.

## Revendications

1. Un procédé de mixage réducteur d'un signal audio à canaux multiples, le procédé comprenant :
la restauration d'échantillons de modulation par impulsion et codage (PCM) de sous-bande pour chaque canal du signal audio à canaux multiples par le décodage du signal audio à canaux multiples et ensuite la déquantification d'un signal audio à canaux multiples codé de sous-bande,
le procédé étant **caractérisé par** :
l'étalonnage des échantillons PCM de sous-bande restaurés pour chaque canal avec un coefficient correspondant à une configuration de mixage réducteur,
la génération d'échantillons PCM de sous-bande correspondant à des canaux prédéterminés par le mixage réducteur des échantillons PCM de sous-bande étalonnés pour chaque canal vers les canaux prédéterminés, et
l'exécution d'un filtrage de sous-bande inverse sur les échantillons PCM de sous-bande générés correspondant aux canaux prédéterminés.

2. Le procédé selon la Revendication 1, où la génération des échantillons PCM de sous-bande comprend la génération d'échantillons PCM de sous-bande correspondant à deux canaux par le mixage réducteur des échantillons PCM de sous-bande étalonnés pour chaque canal vers les deux canaux.

3. Le procédé selon la Revendication 2, où l'exécution du filtrage de sous-bande inverse comprend l'exécution d'un filtrage de sous-bande inverse deux fois seulement par l'exécution du filtrage de sous-bande inverse sur un canal gauche et un canal droit.

4. Le procédé selon la Revendication 1, où la génération des échantillons PCM de sous-bande comprend la génération d'échantillons PCM de sous-bande correspondant à un canal unique par le mixage réducteur des échantillons PCM de sous-bande étalonnés pour chaque canal vers le canal unique.

5. Le procédé selon la Revendication 4, où l'exécution du filtrage de sous-bande inverse comprend l'exécution d'un filtrage de sous-bande inverse pas plus d'une fois par l'exécution du filtrage de sous-bande inverse sur le canal unique.

6. Un appareil de mixage réducteur d'un signal audio à canaux multiples, l'appareil comprenant :
une unité de déquantification destinée à la restauration d'échantillons de modulation par impulsion et codage (PCM) de sous-bande pour chaque canal du signal audio à canaux multiples par le décodage du signal audio à canaux multiples et ensuite la déquantification d'un signal audio à canaux multiples codé de sous-bande,
l'appareil étant **caractérisé par** :
une unité d'étalonnage destinée à l'étalonnage des échantillons PCM de sous-bande restaurés pour chaque canal avec un coefficient correspondant à une configuration de mixage réducteur,
une unité de pré-mixage réducteur destinée à la génération d'échantillons PCM de sous-bande correspondant à des canaux prédéterminés par le mixage réducteur des échantillons PCM de sous-bande étalonnés pour chaque canal vers les canaux prédéterminés, et
un banc de filtres de sous-bande inverses destinée à l'exécution d'un filtrage de sous-bande inverse sur les échantillons PCM de sous-bande générés correspondant aux canaux prédéterminés.

7. L'appareil selon la Revendication 6, où l'unité de pré-mixage réducteur génère des échantillons PCM de sous-bande correspondant à deux canaux par le mixage réducteur des échantillons PCM de sous-bande étalonnés pour chaque canal vers les deux canaux.

8. L'appareil selon la Revendication 7, où le banc de filtres de sous-bande inverses exécute un filtrage de sous-bande inverse deux fois seulement par l'exécution du filtrage de sous-bande inverse sur un canal gauche et un canal droit.

9. L'appareil selon la Revendication 6, où l'unité de pré-mixage réducteur génère des échantillons PCM de sous-bande correspondant à un canal unique par le mixage réducteur des échantillons PCM de sous-bande étalonnés pour chaque canal vers le canal unique.

10. L'appareil selon la Revendication 9, où le banc de filtres de sous-bande inverses exécute un filtrage de sous-bande inverse pas plus d'une fois par l'exécution du filtrage de sous-bande inverse sur le canal unique.
